(19) Europäisches Patentamt / European Patent Office / Office européen des brevets

(11) **EP 3 052 960 B1**

(12) **FASCICULE DE BREVET EUROPEEN**

(45) Date de publication et mention de la délivrance du brevet:
**25.07.2018 Bulletin 2018/30**

(21) Numéro de dépôt: **14766724.0**

(22) Date de dépôt: **17.09.2014**

(51) Int Cl.:
*G01S 7/02* *(2006.01)*

(86) Numéro de dépôt international:
**PCT/EP2014/069804**

(87) Numéro de publication internationale:
**WO 2015/049107 (09.04.2015 Gazette 2015/14)**

(54) **PROCEDE ET SYSTEME DE DETERMINATION D'UNE CONFIGURATION DE RECEPTION ET D'UNE DUREE D'UN INTERVALLE TEMPOREL**

VERFAHREN UND SYSTEM ZUR BESTIMMUNG EINER EMPFANGSKONFIGURATION UND DAUER EINES ZEITINTERVALLS

METHOD AND SYSTEM FOR DETERMINING A RECEPTION CONFIGURATION AND A DURATION OF A TIME INTERVAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.10.2013 FR 1302310**

(43) Date de publication de la demande:
**10.08.2016 Bulletin 2016/32**

(73) Titulaire: **THALES**
**92400 Courbevoie (FR)**

(72) Inventeurs:
• **GLAUDE, Hadrien**
**F-78552 Elancourt Cedex (FR)**
• **BOUCARD, Hubert**
**F-78552 Elancourt Cedex (FR)**

(74) Mandataire: **Priori, Enrico**
**Marks & Clerk France**
**Immeuble "Visium"**
**22, avenue Aristide Briand**
**94117 Arcueil Cedex (FR)**

(56) Documents cités:
**US-A1- 2010 027 715**

• **WINSOR C ET AL: "Optimisation and evaluation of receiver search strategies for electronic support", IET RADAR SONAR NAVIGATION, THE INSTITUTION OF ENGINEERING AND TECHNOLOGY, UK, vol. 6, no. 4, 1 avril 2012 (2012-04-01), pages 233-240, XP011441306, ISSN: 1751-8784, DOI: 10.1049/IET-RSN.2010.0377**
• **VAUGHAN L CLARKSON I: "Optimisation of Periodic Search Strategies for Electronic Support", IEEE TRANSACTIONS ON AEROSPACE AND ELECTRONIC SYSTEMS, IEEE SERVICE CENTER, PISCATAWAY, NJ, US, vol. 47, no. 3, 1 juillet 2011 (2011-07-01), pages 1770-1784, XP011369256, ISSN: 0018-9251, DOI: 10.1109/TAES.2011.5937264**
• **CLARKSON I V L ET AL: "Performance limits of sensor-scheduling strategies in electronic support", IEEE TRANSACTIONS ON AEROSPACE AND ELECTRONIC SYSTEMS, IEEE SERVICE CENTER, PISCATAWAY, NJ, US, vol. 43, no. 2, 1 avril 2007 (2007-04-01), pages 645-650, XP011189401, ISSN: 0018-9251, DOI: 10.1109/TAES.2007.4285359**

**Description**

La présente invention concerne un système et un procédé de détermination des instants de réception et les paramètres de réception qu'un récepteur doit utiliser pour recevoir différents signaux présentant des périodicités. Ces signaux sont, par exemple, des signaux émis par un radar en utilisant une pluralité de fréquences.

Il est connu dans l'état de la technique des systèmes utilisant des récepteurs large bande et qui permettent donc la réception à chaque instant de signaux, quelle que soit la fréquence de modulation utilisée par le système d'émission. Cependant, ces récepteurs offrent une sensibilité, définie comme la capacité à recevoir des signaux faibles ou lointains, faible.

Pour remédier à cette faible sensibilité, il est connu d'utiliser un récepteur dont la bande d'étalement des fréquences de réception est faible, connu aussi sous l'expression de récepteur superhétérodyne ou récepteur commandable en fréquence de réception. Un récepteur superhétérodyne est un récepteur conçu sur le principe du mélange de fréquences, ou hétérodynage, pour convertir le signal reçu en une fréquence intermédiaire plus basse, qu'il est plus facile d'utiliser que la fréquence reçue en direct. Ces récepteurs sont cependant sélectifs en fréquence. De plus, en fonction de l'antenne de réception le couple récepteur, antenne de réception, peut aussi être sélectif spatialement (par rapport à l'angle de gisement ou de site fait par la direction d'arrivée du signal radar), en polarisation ou en dynamique de la puissance du signal radar reçu. Dans le cas de l'utilisation de ce type de récepteur, il est alors nécessaire d'effectuer un balayage de l'ensemble des fréquences, des directions d'arrivée, des différentes polarisations. Ainsi à un instant donné le récepteur ne peut recevoir que les signaux adaptés à sa configuration instantanée.

Dans l'état de la technique il est connu de déterminer, avant l'utilisation du système les différents paramètres que le récepteur utilise à un instant donné. Cependant ce type de système ne permet pas l'adaptation à des évènements pouvant survenir durant son utilisation, comme par exemple la mise en pause du processus de réception des signaux.

L'objet de la présente invention est donc un procédé et un système permettant la détermination des différents paramètres (fréquence de réception, angle d'arrivée, polarisation) qu'un récepteur, par exemple superhétérodyne, doit utiliser pour recevoir un signal émis par un émetteur radar.

Ainsi l'invention propose un procédé de détermination, à un instant donné, d'une configuration de réception optimale d'un récepteur de signaux, comprenant au moins une fréquence de réception, et d'une durée optimale d'un intervalle temporel durant lequel cette configuration de réception optimale afin de recevoir une pluralité de signaux différents et répétitifs parmi un ensemble de M signaux est utilisée. Le procédé comporte une première étape d'initialisation d'une probabilité de réception associée à chacun des différents signaux, et les étapes itératives suivantes :

- une deuxième étape de détermination parmi l'ensemble de M signaux, mise en oeuvre sur un récepteur de signaux, d'un premier ensemble des C signaux les moins reçus et d'un deuxième ensemble des C' signaux les moins reçus, le nombre d'éléments des ensembles C et C' étant compris entre 1 et M,

- une troisième étape de détermination, mise en oeuvre sur ledit récepteur de signaux, associée à chaque configuration de réception, d'une durée optimale durant laquelle utiliser cette configuration, ladite durée optimale étant la durée maximisant un rapport entre ;

    ◦ d'une part une somme pondérée d'un accroissement de la probabilité de réception, associée à chacun des signaux dudit premier ensemble des C signaux les moins reçus, obtenue en utilisant ladite configuration durant ladite durée et
    ◦ d'autre part ladite durée,

- une quatrième étape de détermination, mise en oeuvre sur ledit récepteur de signaux, de ladite configuration de réception optimale des valeurs desdits paramètres de réception,
la configuration de réception optimale étant la configuration de réception maximisant un rapport entre ;

    • d'une part une somme pondérée des accroissements des probabilités de réception, associées à chacun des signaux dudit deuxième ensemble des C' signaux les moins reçus, obtenue en utilisant ladite configuration de réception optimale durant la durée optimale et
    • d'autre part ladite durée optimale,

- une cinquième étape de détermination, mise en oeuvre sur ledit récepteur de signaux, d'une valeur dudit accroissement des probabilités de réception, associées aux signaux autres que les signaux du premier ou deuxième ensemble, en utilisant ladite configuration de réception optimale et en faisant cette réception durant ladite durée optimale,

- une sixième étape de mise à jour de ladite probabilité de réception, mise en oeuvre sur ledit récepteur de signaux, associée à chacun des signaux à partir des accroissements des probabilités,

- une septième étape de réception en utilisant ladite configuration de réception optimale et de ladite durée optimale.

Avantageusement la première étape est en outre adaptée pour l'initialisation de tableaux associés à tout ou partie des signaux et contenant des informations représentatives desdits réceptions déjà effectuées.

Avantageusement la troisième étape de détermination est en outre adaptée pour la mise à jour desdits tableaux associés à tout ou partie des signaux dudit premier ensemble.

Avantageusement la quatrième étape de détermination est en outre adaptée pour la mise à jour desdits tableaux associés à tout ou partie des signaux dudit deuxième ensemble.

Avantageusement la cinquième étape de détermination est en outre adaptée pour la mise à jour desdits tableaux associés à tout ou partie des signaux n'appartenant ni audit premier ensemble ni audit deuxième ensemble.

Avantageusement la mise à jour desdits tableaux est réalisée à partir de :

- de durées, associées auxdits signaux, d'un intervalle temporel permettant la détection de la présence dudit signal si l'étape de réception est réalisée en utilisant une combinaison de paramètres de réception apte à recevoir ce signal durant un de ces intervalles temporels, et/ou,

- de périodes de répétition, associées auxdits signaux, dudit intervalle temporel et/ou,

- de durées, associées auxdits signaux, d'un intervalle temporel d'émission dudit signal et/ou,

- de durées, associées auxdits signaux, au bout de la quelle la présence future dudit signal ne dépend plus de sa présence à cet instant.

L'invention concerne aussi un système de réception d'une pluralité de signaux différents et périodiques comportant :

- au moins un récepteur de signaux,
- au moins un processeur couplé à de la mémoire, ledit processeur étant apte à la mise en oeuvre la procédé selon l'une des revendications 1 à 5 et à paramétrer ledit récepteur.

Avantageusement le récepteur est un récepteur commandable en fréquence de réception.

Avantageusement le récepteur est un récepteur à canaux multiples, pour lequel une bande de réception est obtenue par l'association de plusieurs canaux à bande de réception réduite et pour lequel la bande de fréquences à écouter est variable au moyen d'une commutation sur l'un desdits canaux.

Avantageusement le récepteur est un récepteur superhétérodyne.

L'invention sera mieux comprise et d'autres avantages apparaîtront à la lecture de la description détaillée, faite à titre d'exemple non limitatif et à l'aide des figures parmi lesquelles :

La figure 1 présente les signaux que le procédé de l'invention peut détecter
La figure 2 présente le procédé présenté dans l'invention
La figure 3.a présente un exemple d'espace des phases et temps

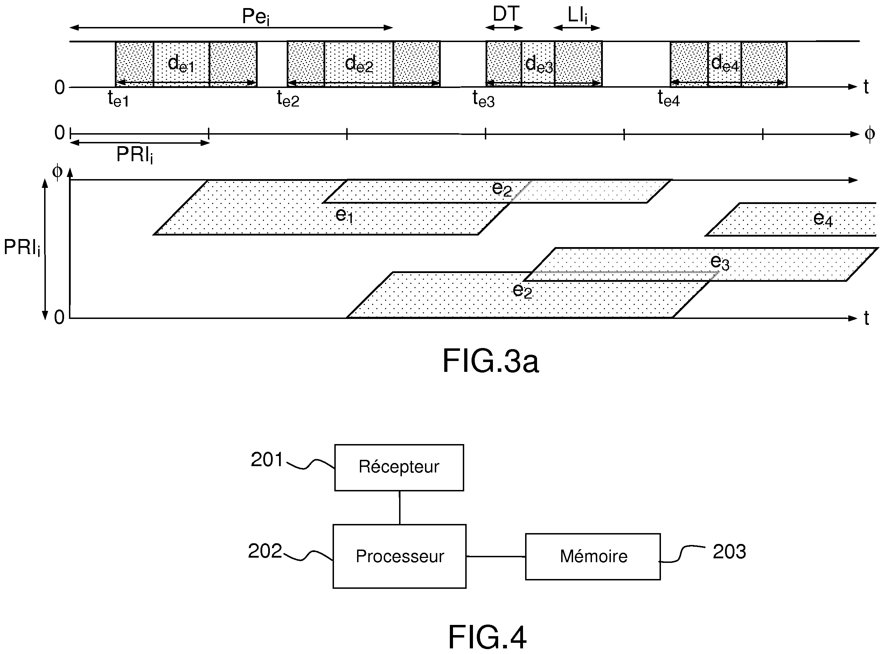

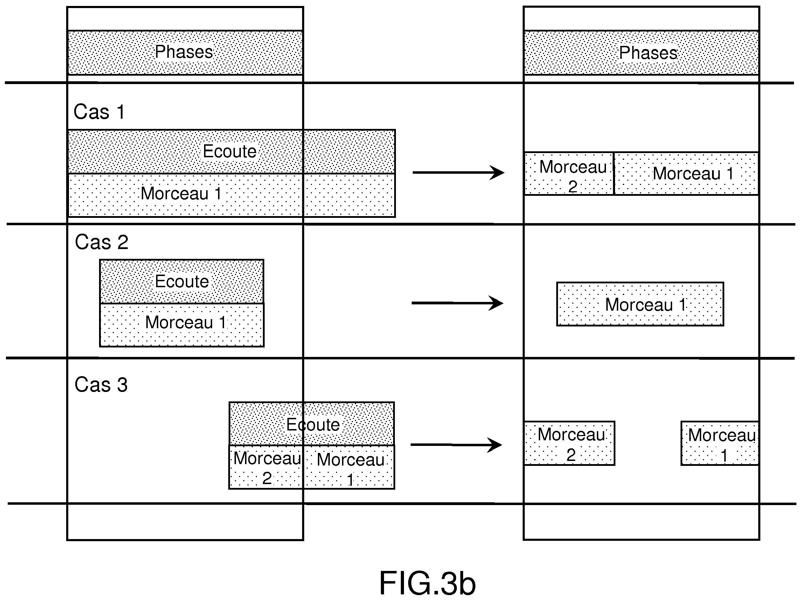

La figure 3.b présente un exemple d'espace des phases
La figure 4 présente le système présenté dans l'invention

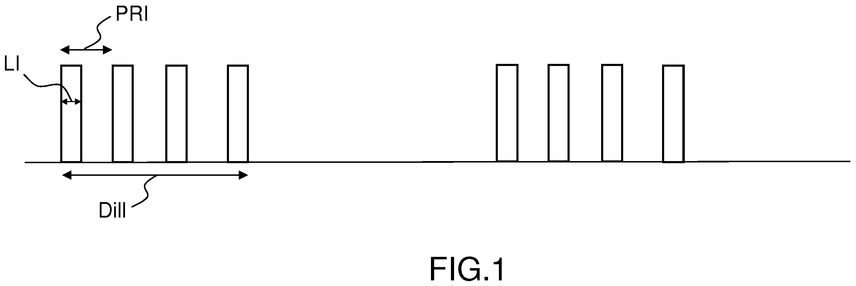

La figure 1 présente le type de signaux pour lesquels le procédé permet la détermination de paramètres de réception. Ces signaux qui sont, par exemple, des signaux radars ont les caractéristiques suivantes :

- Chaque signal présente des intervalles temporels qui permettent la détection de la présence de ce signal si le récepteur est configuré pour recevoir ce signal durant un de ces intervalles temporels. La durée de ces intervalles temporels est notée *LI* et est connue avant l'utilisation du procédé.

- Chaque signal présente une répétition de ces intervalles durant lesquels la détection est possible. La période de la répétition de ces intervalles temporels est connue avant l'utilisation du procédé et elle est notée *PRI.*

- Chaque signal présente des intervalles temporels durant lesquels le signal n'est pas émis vers l'antenne et d'autres durant lesquels le signal est émis vers l'antenne. La durée moyenne de ces intervalles temporels est connue et est notée *Dill.*

- Le signal présente une durée maximale, au bout de laquelle la présence future de ce signal ne dépend plus de sa présence à cet instant. La durée maximale est la durée d'illumination (*Dill*) minorée de la durée d'analyse en utilisant l'algorithme de l'invention (*Dana*). On note la période de revisite $Pe = Dill - Dana.$ Ainsi à la date $t$, toutes les écoutes faites avant $t - Pe$ n'ont aucun impact sur la probabilité d'intercepter le signal suffisamment tôt pour lancer une analyse à cette date $t$.

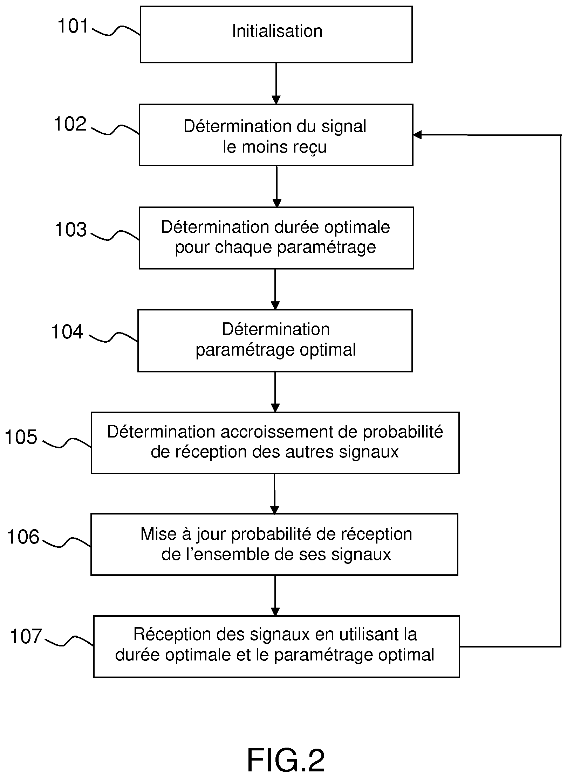

La figure 2 présente le procédé de détermination, à un instant donné, d'une configuration, à utiliser par un récepteur, et d'une durée d'un intervalle temporel, durant lequel utiliser cette configuration afin de recevoir une pluralité de signaux différents et répétitifs parmi un ensemble de M signaux : le procédé comportant :

- une première étape 101 d'initialisation d'une probabilité de réception associée à chacun des différents signaux.

Cette initialisation peut être faite, par exemple et de manière non limitative en mettant à zéro l'ensemble des probabilités de réception associées à chacun des différents signaux. Dans d'autres modes de réalisation il est possible d'initialiser les valeurs des probabilités à une valeur prédéterminée. Ceci, peut par exemple, être utile dans le cas où le procédé est démarré dans un état connu.

Le procédé comporte ensuite les étapes itératives suivantes :

- Une deuxième étape 102 qui permet de déterminer parmi l'ensemble de M signaux un premier ensemble des C signaux les moins reçus et un deuxième ensemble des C' signaux les moins reçus, le nombre d'éléments des ensembles C et C' étant compris entre 1 et M.

C a une valeur comprise entre 1 et M (le nombre de type de signaux) avec une valeur préférentielle de M.
C' a une valeur comprise entre 1 et M avec une valeur préférentielle de 1.

- Le procédé comporte ensuite une troisième étape 103 de détermination, associée à chaque configuration du récepteur, d'une durée optimale durant laquelle utiliser cette configuration, ladite durée optimale étant la durée maximisant un rapport entre :

  ◦ d'une part une somme pondérée des accroissements de la probabilité de réception, les accroissements étant associés à chacun des signaux dudit premier ensemble des C signaux les moins reçus et sont obtenus en utilisant ladite configuration durant ladite durée et
  ◦ d'autre part ladite durée.

- Le procédé comporte ensuite une quatrième étape 104 de détermination, d'une configuration du récepteur optimale, la configuration optimale étant la configuration maximisant un rapport entre :

  - d'une part une somme pondérée des accroissements des probabilités de réception, les accroissements étant associés à chacun des signaux dudit deuxième ensemble des C' signaux les moins reçus et sont obtenus en utilisant ladite configuration durant la durée optimale et
  - d'autre part ladite durée optimale.

- Le procédé comporte ensuite une cinquième étape 105 de détermination d'une valeur de l'accroissement des probabilités de réception associées aux signaux autres que les signaux du premier ou deuxième ensemble, en utilisant ladite configuration optimale et en faisant cette réception durant la durée optimale.

- Le procédé comporte ensuite une sixième étape 106 de mise à jour des probabilités de réception associées à chacun des signaux à partir des accroissements des probabilités.

- Le procédé comporte enfin une septième étape 107 de réception en utilisant la configuration optimale et de la durée optimale.

Ainsi le procédé de l'invention cherche à maximiser la moyenne temporelle de la probabilité de réception des différents signaux périodiques. Chaque signal périodique est associé à une configuration du récepteur qui est définie comme étant un ensemble de valeurs de différents paramètres utilisés pour recevoir les signaux. Les signaux sont en particulier caractérisés par les paramètres suivants :

- la durée des intervalles temporels permettant la détection (*LI*), cette durée correspond à la largeur des impulsions du signal (*LI*),
- la période de la répétition de ces intervalles temporels (*PRI*),
- la durée pendant laquelle le récepteur peut recevoir le signal émis (*Dill*),
- la fréquence d'émission (*f*) et
- et la période de rotation de l'antenne d'émission (*PRA*).

Dans un mode de réalisation, la troisième, quatrième et cinquième étapes utilisent une base de données comportant les caractéristiques de différents signaux à détecter. Cette bibliothèque est construite à partir des renseignements de tous types recueillis avant l'utilisation de ce procédé. Cette base de données peut contenir les trois paramètres principaux permettant de paramétrer le signal :

- la durée des intervalles temporels permettant la détection (*LI*),
- la période de la répétition de ces intervalles temporels (*PRI*) et
- la durée pendant laquelle le récepteur peut recevoir le signal émis (*Dill*).

L'objectif de ce procédé est de maximiser une moyenne pondérée de ces probabilités. Le calcul de la moyenne temporelle de la probabilité de réception des signaux est réalisé par l'intermédiaire du calcul de la probabilité d'interception ou *PoI*. La probabilité d'interception en fonction du temps, $PoI_M(t)$, est la probabilité de détecter au moins une impulsion du signal *M* dans un lobe finissant à la date *t*. Un passage de lobe correspond au moment où le signal peut être reçu. *Dill* indique la durée de ce dit moment.

Pour ce faire, le procédé propose de déterminer, pour un instant donné, la configuration pour effectuer cette réception des signaux et la durée de l'intervalle temporel durant lequel utiliser cette configuration (on utilise aussi l'expression séquence d'écoute pour désigner une suite d'intervalles temporels associés chacun à un ensemble de paramètres d'écoute). Cette détermination est réalisée au fil de l'eau : ainsi, à chaque fin d'un intervalle de réception du signal, on détermine les paramètres utilisés pour la réception dans l'intervalle suivant, connaissant les paramètres utilisés dans les intervalles précédents. C'est-à-dire que l'on détermine la durée et la configuration optimale du récepteur pour le prochain intervalle de réception.

Dans un mode de réalisation le procédé utilise des tableaux, ou listes de couples, associés aux signaux et contenant des informations représentatives des réceptions déjà effectuées en utilisant une configuration permettant de recevoir le signal. Ces tableaux sont aussi appelés espace des phases et temps ou espace des phases.

La première étape 101 est dans un mode de réalisation adaptée pour l'initialisation de l'espace des phases et temps est effectuée en mettant à zéro les valeurs des informations représentatives des réceptions déjà effectuées en utilisant une configuration permettant de recevoir le signal.

La troisième étape 103 de détermination de la durée d'écoute optimale, associée à chaque configuration du récepteur, peut être réalisée en utilisant la relation suivante :

$$d_l = \underset{d}{\mathrm{argmax}}\, \frac{G_l^E(d)}{d}$$

Dans cette relation :

$d_l$ est la durée d'écoute optimale associée à une configuration *l* du récepteur $G_l^E(d)$ est la somme pondérée de l'accroissement de la probabilité de réception des signaux du premier ensemble. Cet accroissement de la probabilité de réception est obtenu en en faisant une réception durant la durée *d*, et en utilisant la valeur *l* de la configuration du récepteur. Cet accroissement est donné par la formule :

$$G_l^E(d) = \sum_{i=1}^{C} w_i G_l^{E,i}(d)$$

Où :

$G_l^{E,i}(d)$ est l'accroissement de la probabilité de réception du signal *i,* obtenu en faisant une réception durant la durée $d$, et en utilisant la valeur $l$ de la configuration du récepteur.

$w_i$ : est un coefficient de pondération représentant l'influence que doit avoir le signal $i$. Ce paramètre est défini par l'utilisateur. Il peut représenter la probabilité de présence de ce signal ou le niveau de danger de celui-ci. Plus ce paramètre est élevé plus la probabilité d'interception de ce signal, après l'utilisation de l'algorithme, sera importante.

$C$ : représente le nombre de signaux le moins reçus qui sont pris en compte pour calculer la somme pondérée.

$E$ : représente la séquence d'écoute déjà réalisée.

Comme la fonction $G_l^{E,i}(d)$ est linéaire par morceaux avec un nombre finis de morceaux, alors le maximum de $\frac{G_l^E(d)}{d}$ ne peut se trouver qu'en un nombre fini de points (Les points de non linéarité de la fonction $G_l^{E,i}(d)$).

Ces points sont déterminés en utilisant l'algorithme suivant, qui permet le calcul de l'accroissement des probabilités de réception du signal $i$, pour une configuration d'un récepteur $l$, d'une écoute $e$ commençant à l'instant $t_e$ et durant $d$. $\Phi_{l,i}$ représente l'espace des phases, associé au signal $i$ et recouvert par les précédentes écoutes utilisant la configuration $l$ du récepteur. $d_p$ est la durée de la précédente écoute réalisée. Cette durée est nulle si l'écoute précédente a été réalisée avec une configuration différente de celle de la configuration actuelle. Le résultat retourné est la représentation analytique de la fonction de gain $G_l^{E,i}(d)$ en fonction de la durée d'écoute $d$. Comme les gains sont linéaires par morceaux, ils sont représentés par une liste finie $G_l^{E,i}$ de triplets $(\alpha_m, a_m, b_m)$, $m \in N$. Chaque triplet représente sur l'intervalle $d \in [\alpha_m \, ; \, \alpha_m + 1]$ le gain $G_l^{E,i}(d) = a_m * d + b_m$.

Dans la suite du procédé les variables suivantes sont utilisées :

- $t'_e$ = date du prochain changement de pente de la courbe. Cette date augmente au fur et à mesure que l'on parcourt l'espace des phases x temps.
- $d_e$ = durée de l'écoute jusqu'au prochain changement de pente.
- $Pente$ = la nouvelle pente de la fonction de gain.
- $Origine$ = ordonnée du morceau de courbe de gain prolongé à l'abscisse 0.
- $Somme$ = valeur de la courbe de gain au changement de pente.
- $borne$ qui représente la durée d'écoute maximale après laquelle la pente de la courbe de gain est toujours égale à un. Cette variable permet d'arrêter de boucler dans l'espace des phases.

De plus l'expression $a \leftarrow b$ signifie que la valeur $b$ est sauvegardée dans la mémoire $a$.

Si $d_p$ = 0 (la dernière écoute a été effectuée avec une configuration différente), alors on effectue les opérations suivantes :

$$t'_e \leftarrow t_e + DT$$

$$borne \leftarrow DT + LI_i + PRI_i$$

$$d \leftarrow DT + LI_i$$

$$G_l^{E,i} \leftarrow \{(0,0,0)\}$$

Sinon, on effectue les opérations suivantes:

$$borne \leftarrow DT + LI_i + PRI_i - d_p$$

De plus, si $d_p \geq DT + LI_i + PRI_i$ alors on effectue l'opération suivante :

$$G_l^{E,i} \leftarrow \{(0,1,0), (PRI_i, 1, 0)\}$$

Sinon, si $d_p \geq DT + LI_i$ alors on effectue les deux opérations suivantes

$$t'_e \leftarrow t_e - LI_i$$

$$d \leftarrow 0$$

Enfin, si aucune des deux conditions précédentes n'est remplie on effectue les trois opérations suivantes :

$$t'_e \leftarrow t_e + DT$$

$$d \leftarrow DT + LI_i - d_p$$

$$G_l^{E,i} \leftarrow \{(0,0,0)\}$$

Ensuite, les opérations suivantes sont effectuées :

$$Somme \leftarrow 0$$

$$\varphi_e \leftarrow t'_e \bmod PRI_i$$

On choisit alors $(a, b) \in \Phi_{l,i}$ tel que $a$ soit le plus grand possible et que $a \neq \varphi_e$.

$$decalage \leftarrow \varphi_e - a$$

$$pente \leftarrow \min\{P_e, t'_e - decalage - b\}/ PRI_i$$

$$origine \leftarrow -pente * d$$

$$G_l^{E,i} = G_l^{E,i} \cup \{(d, pente, origine)\}$$

$$(a, b) \leftarrow \text{successeur de } (a, b) \text{ dans } \Phi_{l,i}$$

$$\Delta\varphi \leftarrow a - \varphi_e$$

Si $\Delta\varphi \neq 0$ alors on effectue l'opération suivante :

$$\Delta\varphi \leftarrow \Delta\varphi + PRI_i$$

$$d \leftarrow d + \Delta\varphi$$

$$somme \leftarrow \Delta\varphi * pente$$

$$pente \leftarrow \min\{P_e, t'_e + d - li - b\}/ PRI_i$$

L'algorithme comporte ensuite les étapes répétitives suivantes qui sont réalisées tant que *d < borne* :

$$origine \leftarrow somme - pente * d$$

$$G_l^{E,i} \leftarrow G_l^{E,i} \cup \{(d, pente, origine)\}$$

$$m \leftarrow a$$

$$(a, b) \leftarrow \text{successeur de } (a, b) \text{ dans } \Phi_{l,i}$$

$$\Delta\varphi \leftarrow a - m$$

Si $\Delta\varphi \neq 0$ alors on effectue l'opération suivante :

$$\Delta\varphi \leftarrow \Delta\varphi + PRI_i$$

$$d \leftarrow d + \Delta\varphi$$

Si *d < borne* alors on effectue les deux opérations suivantes

$$somme \leftarrow \Delta\varphi * pente$$

$$pente \leftarrow \min\{P_e, t'_e + d - li - b\}/ PRI_i$$

Ensuite, les opérations suivantes sont effectuées:

$$somme \leftarrow \big(borne - (d - \Delta\varphi)\big) * pente$$

$$d \leftarrow borne$$

$$pente \leftarrow 1$$

$$origine \leftarrow somme - pente * d$$

$$G_l^{E,i} = G_l^{E,i} \cup \{(d, pente, origine)\}$$

En d'autres termes, dans le cas où la dernière écoute a été effectuée avec une configuration différente ($d_p$ = 0), l'algorithme va mettre à jour les variables suivantes en bouclant sur les rectangles de l'espace des phases: L'algorithme présente alors les trois étapes suivantes :

1. On initialise les variables et on ajoute le premier point à la courbe, à savoir le point correspondant au triplet ($\alpha_m$, $a_m$, $b_m$) = (0,0,0). Ainsi la fonction de gain est nulle jusqu'au prochain point, ce qui permet de modéliser la présence du temps mort, qui est le temps durant lequel le système ne peut pas recevoir de signaux car il est en cours de configuration.

2. On cherche le prochain rectangle dans l'espace des phases en fonction de la date de début d'écoute.

3. On boucle sur les rectangles de l'espace des phases dans la direction du temps, jusqu'à atteindre une durée supérieure à la borne, en mettant à jour les variables décrites plus haut et en ajoutant le point (de, pente, origine) à la courbe.

Lorsque l'on calcule le gain pour le prolongement d'une écoute déjà existante ($d_p$ est alors différent de 0), la courbe de gain est la même que celle de l'écoute différente, sauf qu'elle est décalée de -$d_p$ en abscisse et d'autant qu'il convient en ordonnée pour que le gain soit nul en 0. L'algorithme reste donc le même, une fois les variables initialisées correctement pour prendre en compte ce décalage.

Comme indiqué précédemment, l'espace des phases représente l'ensemble des écoutes qui ont déjà été réalisées pour un type de signal donné. Ainsi, pour chaque configuration du récepteur, on utilise la connaissance des signaux qui sont détectables par le récepteur pour mettre à jour l'espace des phases de ces signaux.

La mise à jour de cet espace des phases est obtenue par le repliement de chaque écoute dans l'intervalle des phases allant de 0 à *PRI*. Ce repliement est réalisé afin de prendre en compte la périodicité de valeur *PRI* du signal. Cette mise à jour est illustrée sur la figure 3. Sur cette figure, en haut, sont représentées, sur l'axe du temps *t*, les écoutes déjà réalisées pour un mode donné. De plus, sur chaque écoute, est isolée la partie utile de l'écoute (de durée $d_{e_i}$) en retranchant le temps mort *(DT)* et la largeur d'impulsion (*LI_i*). De cette façon, on obtient les dates $t_{e_i}$ de début d'impulsion que l'on pourrait intercepter avec cette écoute. En bas, chaque parallélogramme est associé à une écoute $e_i$, et représente, pour cette écoute, les points (date de début de lobe, phase du train d'impulsion dans le lobe) pour lesquels l'écoute aurait intercepté au moins une impulsion.

Cette mise à jour de l'espace des phases, $\Phi_{l,i}$ associé au signal *i*, est réalisée par l'ajout des écoutes $e_i$. Les écoutes doivent être ajoutées dans l'ordre (les dernières programmées sont ajoutées en dernier). Cet espace est représenté par un ensemble ordonné de couples (*a,b*). Soit deux couples successifs (*a,b*), (*c,d*). Deux couples (*a,b*), (*c,d*) qui se suivent signifient que l'on a réalisé une ou plusieurs écoutes qui peuvent intercepter les illuminations qui ne sont pas encore terminées, dont la date de début est inférieure à *b* + $\Phi_{l,i}$ - *a* et dont la phase est comprise entre *a* et *c*. $\Phi_{l,i}$ est la phase de l'illumination. La partie dont la phase est comprise dans l'intervalle [*a*; *c*] et dont le temps est inférieur à *b* est occupée par les écoutes. Enfin, on définit le successeur du dernier couple comme étant le premier couple. Ainsi $\Phi_{l,i}$ contient donc toujours un couple.

Les opérations à effectuer sont les suivantes :

$t'_e \leftarrow t_e + DT$ On calcule ainsi la partie utile de l'écoute, c'est à dire après le temps mort.

$g'_e \leftarrow t_e + d - LI_i$ On calcule la partie utile de l'écoute. $g'_e$ est la date de fin d'écoute utile, c'est à dire après avoir laissé le temps d'intercepter une impulsion entièrement. Autrement dit si une impulsion, de durée *LI,* commence à $g'_e$ elle sera interceptée entièrement par l'écoute car celle-ci se termine réellement à $g'_e$ + *LI.*

$\Psi_e \leftarrow g'_e$ mod $PRI_i$ $\Psi_e$ représente la phase de la fin de l'écoute

Si $g'_e$ - $t'_e \geq PRI_i$ alors on effectue l'opération suivante (Cas où l'écoute recouvre tout l'espace des phases) :

$$\Phi_{l,i} \leftarrow \{(0, g'_e - \Psi_e), (\Psi_e, g'_e - PRI_i)\}$$

Sinon si $g'_e > t'_e$ alors on effectue les opérations suivantes :

$\phi_e \leftarrow t'_e$ mod $PRI_i$ $\phi_e$ représente la phase du début de l'écoute

Si $\Psi_e > \phi_e$ (Si l'écoute possède une partie utile) alors pour tout (*a,b*) $\in \Phi_{l,i}$ on effectue les instructions suivantes :

Si $g'_e$ - $b \geq P_e$ alors on effectue l'opération suivante :

$$b \leftarrow -\infty$$

Si $a \leq \Psi_e$ alors on effectue les opérations suivantes

$$m \leftarrow a + (\Psi_e - b)$$

Si $a \geq \phi_e$ alors on effectue l'opération suivante

$$\Phi_{l,i} \leftarrow \Phi_{l,i} \backslash \{(a,b)\}$$

on supprime le couple ($a$,$b$) de $\Phi_{l,i}$.

$$\Phi_{l,i} \leftarrow \Phi_{l,i} \cup \{(\phi_e, t'_e), (\Psi_e, m)\}.$$

Sinon, dans le cas où dans l'espace des phases l'écoute forme deux blocs, on effectue les opérations suivantes :
Pour tout $(a,b) \in \Phi_{l,i}$ on effectue alors les instructions suivantes :

Si $g'_e$ - $b \geq P_e$ alors on effectue l'opération suivante :

$$b \leftarrow -\infty$$

Si $a > \phi_e$ alors on effectue l'opération suivante :

$$\Phi_{l,i} \leftarrow \Phi_{l,i} \backslash \{(a,b)\}$$

on supprime le couple ($a$,$b$) de $\Phi_{l,i}$.

Si a $\leq \Psi_e$ alors on effectue les deux opérations suivantes :

$$m \leftarrow b + (\Psi_e - a)$$

$$\Phi_{l,i} \leftarrow \Phi_{l,i} \backslash \{(a,b)\}$$

$$\Phi_{l,i} \leftarrow \Phi_{l,i} \cup \{(\phi_e, t'_e), (\Psi_e, m), (0, t'_e + PRI_i - \phi_e)\}$$

Ensuite on ne garde que les couples successifs dont la composante temporelle vaut -∞.
En d'autres termes et comme illustré sur la figure 3.a, l'espace des phases peut être représenté comme étant composé de parallélogrammes. Vu par la droite et en redressant les parallélogrammes pour en faire des rectangles, on peut décrire l'espace des phases par une fonction constante par morceaux évoluant sur [0; *PRI*]. On peut donc la représenter sous forme d'une liste de couples. A chaque morceau, on associe le temps passé depuis l'écoute correspondant au parallélogramme correspondant au morceau. Si le temps passé est plus grand que *Pe* (*Pe* est la période de revisite), alors on peut considérer que le temps passé est infini.
L'algorithme se charge donc d'ajouter le ou les morceaux correspondants aux parallélogrammes d'une nouvelle écoute. Ceci est fait en supprimant les morceaux recouverts et les morceaux « trop vieux ». Plusieurs cas se présentent en fonction de la durée et de l'instant de la nouvelle écoute.
La figure 3.b présente d'une autre manière notre algorithme. Dans le cas comme l'écoute dure plus qu'une *PRI* alors on peut remplacer la totalité de l'espace des phases et temps par deux morceaux. Dans le cas 2 si la phase au début de l'écoute est inférieure à celle à la fin de l'écoute on a besoin d'ajouter qu'un seul rectangle ou morceau dans l'espace des phases et temps. Dans le cas 3 il est nécessaire de rajouter deux morceaux.

Ensuite il est possible de calculer la valeur de $\frac{G_l^E(d)}{d}$ pour chaque valeur de $d = \alpha_m$ des triplets.

Ensuite la valeur $d_l$ est déterminée comme étant la valeur pour laquelle la valeur de $\frac{G_l^E(d)}{d}$ est maximale.

La quatrième étape 104 de détermination d'une configuration du récepteur optimale peut être réalisée en utilisant la relation suivante :

$$l_{opt} = \underset{l}{\mathrm{argmax}}\, \frac{G_l^E(d_l)}{d_l}$$

Dans cette relation :

$d_l$ est la durée d'écoute optimale associée à une configuration *l* du récepteur $G_l^E(d)$ est la somme pondérée de l'accroissement de la probabilité de réception des signaux du premier ensemble. Cet accroissement de la probabilité de réception est obtenu en en faisant une réception durant la durée *d*, et en utilisant la valeur *l* de la configuration du récepteur. Cet accroissement est donné par la formule :

$$G_l^E(d_l) = \sum_{i=1}^{C'} w_i G_l^{E,i}(d_l)$$

Où:

$G_l^{E,i}(d_l)$ est l'accroissement de la probabilité de réception du signal *i,* obtenu en faisant une réception durant la durée *d*, et en utilisant la valeur *l* de la configuration du récepteur.
$w_i$ : est un coefficient de pondération représentant l'influence que doit avoir le signal *i*. Ce paramètre est défini par l'utilisateur. Plus ce paramètre est élevé plus la probabilité d'interception de ce signal est importante.
*C'* : représente le nombre de signaux le moins reçus qui sont considérés

Dans le cas où *C'* est supérieur à *C*, l'ensemble des $G_l^{E,i}(d_l)$ n'auront pas été calculés. En particulier les éléments pour *i* variant de *C* + 1 à *C'*. Il est donc nécessaire de calculer ces valeurs. Pour ce faire, il est possible d'utiliser le même algorithme que pour l'étape précédente.

Ainsi à partir de la liste finie de triplets ($\alpha_m$, $a_m$, $b_m$), $m \in N$, chaque triplet représentante sur l'intervalle $d \in [\alpha_m\,;\alpha_m+1]$ le gain $G_l^{E,i}(d) = a_m * d + b_m$, il est possible de calculer $G_l^{E,i}(d_l)$ pour chaque *i* variant de *C* + 1 à *C'*.

Ainsi il est possible de calculer la valeur de $\frac{G_l^E(d_l)}{d_l}$ pour chaque configuration *l* du récepteur. Comme le nombre de configurations est fini l'homme du métier peut ensuite déterminer la configuration optimale qui maximise $\frac{G_l^E(d_l)}{d_l}$

La détermination de $G_{l_{opt}}^{E,i}\left(d_{l_{opt}}\right)$ est réalisée comme durant la troisième étape 103, de même que la mise à jour de l'espace des phases.

Ensuite la cinquième étape 105 permet de la détermination d'une valeur de l'accroissement des probabilités de réception, associées aux signaux autres que les signaux du premier ou deuxième ensemble. Cette détermination est réalisée en utilisant la configuration optimale et en faisant cette réception durant ladite durée optimale.

Cette étape est réalisée en calculant la valeur de $G_{l_{opt}}^{E,i}\left(d_{l_{opt}}\right)$ pour les signaux autres que ceux du premier et deuxième ensemble. Pour ce faire il est possible d'utiliser l'algorithme de la troisième étape.

La sixième étape 106 de mise à jour de la probabilité de réception associée à chacun des signaux est réalisée à partir des accroissements des probabilités. Pour ce faire la probabilité de réception obtenue d'un signal *i*, suite à l'écoute précédente, est incrémentée d'une valeur correspond à la $G_{l_{opt}}^{E,i}\left(d_{l_{opt}}\right)$.

Enfin le récepteur est configuré pour faire une écoute en utilisant la configuration $l_{opt}$ et durant une durée $d_{l_{opt}}$.

La figure 4 présente un système adapté à l'utilisation de ce procédé. Ce système comporte un récepteur 201 de signaux et un processeur 202 couplé à de la mémoire 203. Le processeur est apte à la mise en oeuvre du procédé présenté précédemment et à paramétrer le récepteur de signaux.

Dans un mode de réalisation, le récepteur est un récepteur commandable en fréquence de réception. Ainsi ce récepteur peut par exemple être un récepteur à canaux multiples, pour lequel une bande de réception est obtenue par l'association de plusieurs canaux à bande de réception réduite et pour lequel la bande de fréquences à écouter est variable au moyen d'une commutation sur l'un des canaux. Ce peut aussi être un récepteur de signaux est de type récepteur superhétérodyne.

**Revendications**

1. Procédé de détermination, à un instant donné, d'une configuration de réception optimale d'un récepteur de signaux, ladite configuration de réception étant un ensemble de valeurs d'un ou plusieurs paramètres comprenant au moins une fréquence de réception, et de détermination d'une durée optimale d'un intervalle temporel durant lequel utiliser cette configuration de réception optimale afin de recevoir une pluralité de signaux différents et répétitifs parmi un ensemble de M signaux, le procédé comportant :

   • une première étape (101), mise en oeuvre sur un récepteur de signaux, d'initialisation d'une probabilité de réception associée à chacun des différents signaux,

   et les étapes itératives suivantes :

   • une deuxième étape (102), mise en oeuvre sur ledit récepteur de signaux, de détermination parmi l'ensemble de M signaux d'un premier ensemble des C signaux les moins reçus et d'un deuxième ensemble des C' signaux les moins reçus, le nombre d'éléments des ensembles C et C' étant compris entre 1 et M,
   • une troisième étape (103), mise en oeuvre sur ledit récepteur de signaux, de détermination, associée à chaque configuration de réception, d'une durée optimale durant laquelle utiliser cette configuration, ladite durée optimale étant la durée maximisant un rapport entre ;

      ◦ d'une part une somme pondérée d'un accroissement de la probabilité de réception, associée à chacun des signaux dudit premier ensemble des C signaux les moins reçus, obtenue en utilisant ladite configuration durant ladite durée et
      ◦ d'autre part ladite durée,

   • une quatrième étape (104), mise en oeuvre sur ledit récepteur de signaux, de détermination, de ladite configuration de réception optimale des valeurs desdits paramètres de réception,
   ladite configuration de réception optimale étant la configuration de réception maximisant un rapport entre ;

      • d'une part une somme pondérée des accroissements des probabilités de réception, associées à chacun des signaux dudit deuxième ensemble des C' signaux les moins reçus, obtenue en utilisant ladite configuration de réception optimale durant la durée optimale et
      • d'autre part ladite durée optimale,

   • une cinquième étape (105), mise en oeuvre sur ledit récepteur de signaux, de détermination d'une valeur dudit accroissement des probabilités de réception, associées aux signaux autres que les signaux du premier ou deuxième ensemble, en utilisant ladite configuration de réception optimale et en faisant cette réception durant ladite durée optimale,
   • une sixième étape (106), mise en oeuvre sur ledit récepteur de signaux, de mise à jour de ladite probabilité de réception associée à chacun des signaux à partir des accroissements des probabilités,
   • une septième étape (107) de réception en utilisant ladite configuration de réception optimale et de ladite durée optimale.

2. Procédé de détermination selon la revendication 1 dans lequel :

ladite première étape (101) est en outre adaptée pour l'initialisation de tableaux associés à tout ou partie des signaux et contenant des informations représentatives desdits réceptions déjà effectuées.

3. Procédé de détermination selon la revendication 2 dans lequel :
ladite troisième étape (103) de détermination est en outre adaptée pour la mise à jour desdits tableaux associés à tout ou partie des signaux dudit premier ensemble.

4. Procédé de détermination selon la revendication 2 ou 3 dans lequel :
ladite quatrième étape (104) de détermination est en outre adaptée pour la mise à jour desdits tableaux associés à tout ou partie des signaux dudit deuxième ensemble.

5. Procédé de détermination selon l'une des revendications 2 à 4 dans lequel :
ladite cinquième étape (105) de détermination est en outre adaptée pour la mise à jour desdits tableaux associés à tout ou partie des signaux n'appartenant ni audit premier ensemble ni audit deuxième ensemble.

6. Procédé de détermination selon l'une des revendications 3 à 5 dans lequel ladite mise à jour desdits tableaux est réalisée à partir de :

• de durées, associées auxdits signaux, d'un intervalle temporel permettant la détection de la présence dudit signal si l'étape de réception est réalisée en utilisant une combinaison de paramètres de réception apte à recevoir ce signal durant un de ces intervalles temporels, et/ou,
• de périodes de répétition, associées auxdits signaux, dudit intervalle temporel et/ou,
• de durées, associées auxdits signaux, d'un intervalle temporel d'émission dudit signal et/ou,
• de durées, associées auxdits signaux, au bout de la quelle la présence future dudit signal ne dépend plus de sa présence à cet instant.

7. Système de réception d'une pluralité de signaux différents et périodiques comportant :

• au moins un récepteur (201) de signaux,
• au moins un processeur (202) couplé à de la mémoire (203), ledit processeur étant apte à la mise en oeuvre la procédé selon l'une des revendications 1 à 5 et à paramétrer ledit récepteur.

8. Système selon la revendication 7 dans lequel ledit récepteur est un récepteur commandable en fréquence de réception.

9. Système selon la revendication 7 dans lequel ledit récepteur est un récepteur à canaux multiples, pour lequel une bande de réception est obtenue par l'association de plusieurs canaux à bande de réception réduite et pour lequel la bande de fréquences à écouter est variable au moyen d'une commutation sur l'un desdits canaux.

10. Système selon la revendication 7 dans lequel ledit récepteur est un récepteur superhétérodyne.


**Patentansprüche**

1. Verfahren zur Bestimmung, zu einem gegebenen Augenblick, einer optimalen Empfangskonfiguration eines Signalempfängers, wobei die Empfangskonfiguration eine Gruppe von Werten eines oder mehrerer Parameter ist, beinhaltend mindestens eine Empfangsfrequenz, und zur Bestimmung einer optimalen Dauer eines Zeitintervalls, in dessen Verlauf diese optimale Empfangskonfiguration zu verwenden ist, um eine Vielzahl unterschiedlicher und repetitiver Signale aus einer Gruppe von M Signalen zu empfangen, wobei das Verfahren Folgendes beinhaltet:

• einen ersten Schritt (101), welcher an einem Signalempfänger umgesetzt wird, der Initialisierung einer Empfangswahrscheinlichkeit, verbunden mit jedem der unterschiedlichen Signale,

und folgende iterative Schritte:

• einen zweiten Schritt (102), umgesetzt an dem Signalempfänger, der Bestimmung, aus einer Gruppe von M Signalen, einer ersten Gruppe der C am seltensten empfangenen Signale und einer zweiten Gruppe der C' am seltensten empfangenen Signale, wobei die Anzahl der Elemente der Gruppen C und C' zwischen 1 und M beträgt,

• einen dritten Schritt (103), umgesetzt an dem Signalempfänger, der Bestimmung, in Verbindung mit jeder Empfangskonfiguration, einer optimalen Dauer, in welcher diese Konfiguration zu verwenden ist, wobei die optimale Dauer die Dauer ist, welche das Verhältnis zwischen folgenden Elementen maximiert:

  ◦ einerseits, einer gewichteten Summe eines Anstiegs der Empfangswahrscheinlichkeit in Verbindung mit jedem der Signale der ersten Gruppe der C am seltensten Empfangenen Signale, erzielt unter Verwendung der Konfiguration während der Dauer, und
  ◦ andererseits, der Dauer,

• einen vierten Schritt (104), umgesetzt an dem Signalempfänger, der Bestimmung der optimalen Empfangskonfiguration der Werte der Empfangsparameter, wobei die optimale Empfangskonfiguration die Empfangskonfiguration ist, welche das Verhältnis zwischen folgenden Elementen maximiert:
• einerseits, einer gewichteten Summe der Anstiege der Empfangswahrscheinlichkeiten in Verbindung mit jedem der Signale der zweiten Gruppe der C' am seltensten empfangenen Signale, erzielt unter Verwendung der optimalen Empfangskonfiguration während der optimalen Dauer, und
• andererseits, der optimalen Dauer,
• einen fünften Schritt (105), umgesetzt an dem Signalempfänger, der Bestimmung eines Wertes des Anstiegs der Empfangswahrscheinlichkeiten, in Verbindung mit anderen Signalen als denjenigen der ersten oder der zweiten Gruppe, unter Verwendung der optimalen Empfangskonfiguration und unter Bewerkstelligung dieses Empfangs während der optimalen Dauer,
• einen sechsten Schritt (106), umgesetzt an dem Signalempfänger, der Aktualisierung der Empfangswahrscheinlichkeit in Verbindung mit jedem der Signale anhand der Anstiege der Wahrscheinlichkeiten,
• einen siebenten Schritt (107) des Empfangs unter Verwendung der optimalen Empfangskonfiguration und der optimalen Dauer.

2. Bestimmungsverfahren nach Anspruch 1, bei welchem:
der erste Schritt (101) zudem zum Initialisieren von mit allen oder einem Teil der Signale verbundenen Tabellen geeignet ist, welche repräsentative Informationen der bereits getätigten Empfänge enthalten.

3. Bestimmungsverfahren nach Anspruch 2, bei welchem:
der dritte Schritt (103) der Bestimmung zudem zum Aktualisieren der mit allen oder einem Teil der Signale der ersten Gruppe verbundenen Tabellen geeignet ist.

4. Bestimmungsverfahren nach Anspruch 2 oder 3, bei welchem:
der vierte Schritt (104) der Bestimmung zudem zum Aktualisieren der mit allen oder einem Teil der Signale der zweiten Gruppe verbundenen Tabellen geeignet ist.

5. Bestimmungsverfahren nach einem der Ansprüche 2 bis 4, bei welchem:
der fünfte Schritt (105) der Bestimmung zudem zum Aktualisieren der mit allen oder einem Teil der Signale verbundenen Tabellen geeignet ist, welche weder zur ersten noch zur zweiten Gruppe gehören.

6. Bestimmungsverfahren nach einem der Ansprüche 3 bis 5, bei welchem die Aktualisierung der Tabellen erfolgt anhand von:

• Dauern, die mit den Signalen verbunden sind, eines Zeitintervalls, welches die Erkennung des Vorliegens des Signals ermöglicht, wenn der Schritt des Empfangens erfolgt ist, unter Verwendung einer Kombination von Empfangsparametern, welche in der Lage sind, dieses Signal während eines dieser Zeitintervalle zu empfangen, und/oder,
• Wiederholungsperioden des Zeitintervalls, welche mit den Signalen verbunden sind, und/oder,
• Dauern eines Zeitintervalls der Sendung des Signals, welche mit den Signalen verbunden sind, und/oder,
• Dauern, welche mit den Signalen verbunden sind, nach deren Ablauf das zukünftige Vorliegen des Signals nicht mehr von seinem augenblicklichen Vorliegen abhängt.

7. Empfangssystem einer Vielzahl unterschiedlicher und periodischer Signale, Folgendes beinhaltend:

• mindestens einen Empfänger (201) von Signalen,
• mindestens einen Prozessor (202), gekoppelt an Speicherkapazität (203), wobei der Prozessor in der Lage ist, das Verfahren nach einem der Ansprüche 1 bis 5 umzusetzen und den Empfänger zu parametrieren.

**8.** System nach Anspruch 7, bei welchem der Empfänger ein Empfänger ist, der in Bezug auf die Empfangsfrequenz gesteuert werden kann.

**9.** System nach Anspruch 7, bei welchem der Empfänger ein Empfänger mit multiplen Kanälen ist, für welchen ein Empfangsband durch Verbindung mehrerer Kanäle mit reduziertem Empfangsband erzielt wird, und für welchen das abzuhörende Frequenzband mit Hilfe einer Umschaltung auf einen der Kanäle variabel ist.

**10.** System nach Anspruch 7, bei welchem der Empfänger ein superheterodyner Empfänger ist.

**Claims**

**1.** A method for determining, at a given instant, an optimal reception configuration of a signal receiver, said reception configuration being a set of values of one or more parameters comprising at least one reception frequency, and for determining an optimal duration of a time interval during which to use this optimal reception configuration in order to receive a plurality of different and repetitive signals from among a set of M signals, the method comprising:

• a first step (101), implemented on a signal receiver, of initialising a probability of reception associated with each of the different signals,

and the following iterative steps:

• a second step (102), implemented on said signal receiver, of determining from among the set of M signals a first set of C least received signals and a second set of C' least received signals, the number of elements of sets C and C' being between 1 and M,
• a third step (103), implemented on said signal receiver, of determining, associated with each reception configuration, an optimal duration during which to use this configuration, said optimal duration being the duration maximising a ratio between:

○ on the one hand a weighted sum of an increase in the probability of reception, associated with each of the signals of said first set of C least received signals, obtained using said configuration during said duration and
○ on the other hand said duration,

• a fourth step (104), implemented on said signal receiver, of determining said optimal reception configuration of the values of said reception parameters,

said optimal reception configuration being the reception configuration maximising a ratio between:

• on the one hand a weighted sum of the increases in the probabilities of reception, associated with each of the signals of said second set of C' least received signals, obtained using said optimal reception configuration during said optimal duration and
• on the other hand said optimal duration,
• a fifth step (105), implemented on said signal receiver, of determining a value of said increase in the probabilities of reception, associated with the signals other than the signals of the first or second set, using said optimal reception configuration and performing this reception during said optimal duration,
• a sixth step (106), implemented on said signal receiver, of updating said probability of reception associated with each of the signals based on the increases in the probabilities,
• a seventh step (107) of reception using said optimal reception configuration and said optimal duration.

**2.** The method of determination according to Claim 1, in which:
said first step (101) is further adapted for initialising tables associated with all or part of the signals and containing information representative of said receptions already performed.

**3.** The method of determination according to Claim 2, in which:
said third determining step (103) is further adapted for updating said tables associated with all or part of the signals of said first set.

4. The method of determination according to Claim 2 or 3, in which:
said fourth determining step (104) is further adapted for updating said tables associated with all or part of the signals of said second set.

5. The method of determination according to any of Claims 2 to 4, in which:
said fifth determining step (105) is further adapted for updating said tables associated with all or part of the signals belonging neither to said first set nor to said second set.

6. The method of determination according to any of Claims 3 to 5, in which said updating of said tables is performed based on:

• durations, associated with said signals, of a time interval allowing the detection of the presence of said signal if the step of reception is performed using a combination of reception parameters capable of receiving this signal during one of these time intervals, and/or,
• periods of repetition, associated with said signals, of said time interval and/or,
• durations, associated with said signals, of a time interval of transmission of said signal and/or,
• durations, associated with said signals, at the end of which the future presence of said signal no longer depends on its presence at this instant.

7. A system of reception of a plurality of different and periodic signals comprising:

• at least one signal receiver (201),
• at least one processor (202) coupled to the memory (203), said processor being capable of implementing the method according to any of Claims 1 to 5 and of setting the parameters of said receiver.

8. The system according to Claim 7, in which said receiver is a controllable reception frequency receiver.

9. The system according to Claim 7, in which said receiver is a multiple channel receiver, for which a reception band is obtained by the association of several reduced reception band channels and for which the frequency band to be listened to is adjustable by means of switching onto one of said channels.

10. The system according to Claim 7, in which said receiver is a superheterodyne receiver.

FIG.1

101 — Initialisation

102 — Détermination du signal le moins reçu

103 — Détermination durée optimale pour chaque paramétrage

104 — Détermination paramétrage optimal

105 — Détermination accroissement de probabilité de réception des autres signaux

106 — Mise à jour probabilité de réception de l'ensemble de ses signaux

107 — Réception des signaux en utilisant la durée optimale et le paramétrage optimal

FIG.2

FIG.3a

FIG.4

FIG.3b